# EUROPEAN PATENT APPLICATION

(11) **EP 3 034 915 A1**
(43) Date of publication of application: **22.06.2016**
(21) Application number: 15199874.7
(22) Date of filing: 14.12.2015
(51) Int. Cl.: F16K 1/24, F16K 5/06

(54) **A SUMPLESS BALL VALVE**

(30) Priority: 16.12.2014 GB 201422323
(71) Applicant: Airbus Operations Limited, Bristol BS34 7PA (GB)
(72) Inventor: Shopland, Paul, Bristol, BS34 7PA (GB); Tichborne, Franklin, Bristol, BS14 OBX (GB)
(74) Representative: Ribeiro, James Michael

(57) **Abstract**

A sumpless valve is disclosed, which has a closure member (207) which is rotatable between a closed position and an open position. A substantially straight or convex bottom wall is provided in the valve, to provide a substantially flat-bottomed flow path through the valve, to avoid the build-up of unwanted fluids in a sump of the valve, located below a substantially straight flow path through the valve. A retraction mechanism (4) for retracting the closure member (207) before rotating it away from its closed position is also disclosed.

## Description

### FIELD OF THE INVENTION

The present invention relates to valves for a fluid transport system. In particular the invention relates to a ball valve for use with liquids at low temperature, particularly in aircraft fuel systems.

### BACKGROUND OF THE INVENTION

In liquid transfer systems, the use of ball valves is well known. Ball valves generally have a spherical shroud, housing a spherical 'ball' acting as a closure member of the ball valve, which comprises an opening through its middle, to allow the passage of fluid through the valve along a flow path when the opening is aligned to direct flow through the shroud, and to prevent the passage of fluid when the spherical closure member is aligned substantially perpendicular to the direction of fluid flow in the flow path.

In many applications, the valve will be oriented to have a horizontal direction of flow through the shroud. This means that fluid can collect in the bottom of the spherical shroud. If the fluid which collects in the bottom of the shroud can solidify, for example if it is water and the water can freeze, then there is a risk that it could jam the valve in an open or closed position. In particular, in aircraft fuels systems, water can potentially find its way into the fuel, for example, by ingress of non-zero humidity air entering the tanks via the wing vents as they are emptied of fuel during engine operation, or by ingress of humid air when the tanks are opened to atmospheric levels of humidity during maintenance or dissolved water in the uplifted fuel during refuelling on the ground. It is therefore near impossible to prevent any water from being present in an aircraft fuel system. Where a sump exists in the fuel system, such as in the bottom of a spherical ball valve, water, being of greater density than fuel, will tend to collect in the sump. At normal operational altitudes, fuel temperatures can often be at below 0 degrees Centigrade and so water in the system may be prone to freezing. Water freezing in the sump of the ball valve can potentially therefore solidify and could prevent the valve from moving from a closed position to an open position, or vice versa.

The present invention therefore seeks to address these issues and to provide an improved valve for a fluid transport system.

### SUMMARY OF THE INVENTION

A first aspect of the invention provides a fluid control valve comprising a valve body, having a valve chamber disposed between an inlet and an outlet of the valve, the valve chamber providing a fluid flow path between an inlet opening and an outlet opening of the valve chamber; a closure member configured to be rotated between a closed position, in which the flow path through the valve chamber is closed by the closure member closing one of the inlet and outlet openings, and an open position, in which the closure member is moved away from the flow path and the flow path through the valve chamber is open; wherein the valve chamber comprises an inner side wall which provides a substantially straight or substantially convex path through the valve chamber, so as to prevent fluid from gathering in the valve chamber when the valve is oriented with the side wall toward the bottom of the valve.

Accordingly, the present invention provides what can be termed a 'sumpless' valve, which operates in a similar manner to a conventional ball valve, but which, when appropriately oriented, avoids having any significant 'sump' in the valve, in which fluids may gather due to gravitational influence and subsequently solidify, which can in certain situations prevent actuation of the valve between open and closed positions.

The substantially straight or convex side wall extends through a major portion of the valve chamber, for example more than half of the extent of the valve chamber in a flow direction through the valve, so that a majority of the valve chamber has no sump in it. A small sump may be necessary near to the outlet or inlet which is sealed by the closure member, to enable proper sealing of the outlet or inlet, but the valve chamber is substantially sumpless, since the substantially straight or convex wall extends through more than a third of the length of the chamber, preferably through more than a half the length of the chamber, more preferably through more than two-thirds of the length of the chamber and more preferably through more than three quarters of the length of the valve chamber without descending below the level of a straight flow path between the inlet and the outlet.

The inner side wall may be planar, or it may have a concave shape when viewed in a direction of flow through the valve chamber. In either case the inner side wall is typically straight or convex when viewed in cross-section transverse to a direction of flow through the valve chamber - thereby providing a substantially straight or substantially convex path through the valve chamber.

The valve chamber may be at least part spherical. This allows the closure member to rotate out of a linear flow path through the valve chamber, into a part of the valve chamber which is out of the direct flow path, leaving a flow path through the valve which a substantially open bore and which is not obstructed by the closure member. Alternatively the part of the valve chamber which is out of the direct flow path may be non-spherical, for instance cylindrical.

The closure member may be at least part spherical. This allows the closure member to locate in a part spherical part of the valve chamber, out of the way of a principal, substantially straight, fluid flow path through the valve chamber. Alternatively the closure member may be at least part cylindrical, allowing it to locate in a part cylindrical part of the valve chamber.

The closure member may be arranged to rotate toward a side of the valve chamber substantially opposite the substantially straight or substantially convex inner side wall. This can further assist with removing the closure member from the principal flow path through the valve chamber when the valve is open.

The closure member may comprise a seal located in a substantially circumferential groove on a part-spherical surface of the closure member. This can assist with sealing the valve shut when the closure member is in its closed position.

The substantially straight or substantially convex inner side wall may comprise a recess for receiving a portion of the closure member. This can assist with permitting full engagement around the full circumference of the closure member to close the opening, and if any seal is present, helps engage the seal with the inlet or outlet opening which is closed by the closure member.

The recess may have a depth of around 10% of the width of the flow path through the inlet or outlet opening, which is engaged by the closure member to close the flow path.

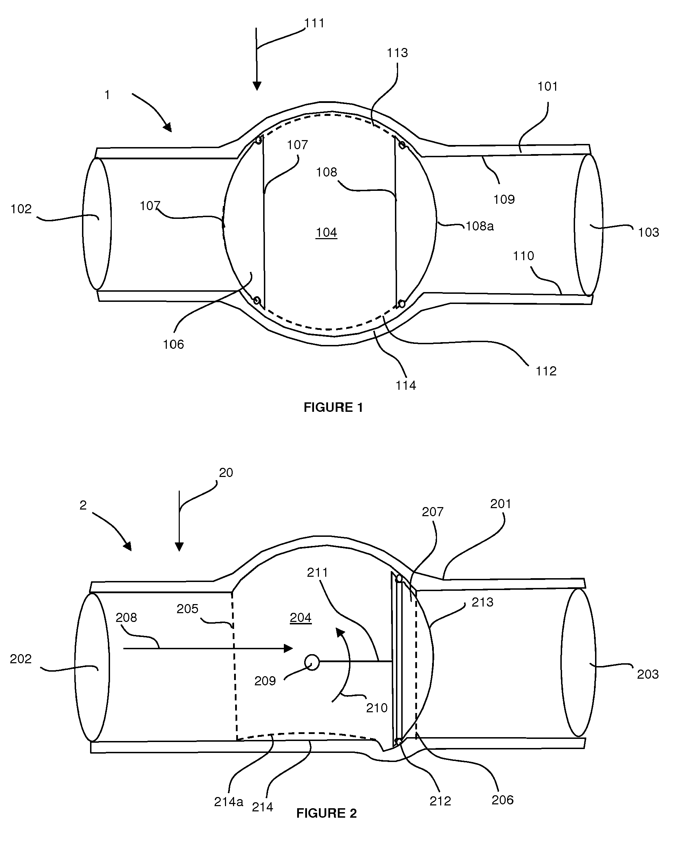

The recess is sized to just retain the lower portion of the rotatable closure member and is shaped to provide a laminar flow when the valve is open. In the prior art designs shown in Figure 1, the ball needed to traverse 90 degrees of the lower arc, potentially driving any seals through solid ice adhering to the lower shroud or wall of the valve chamber to move between closed and open positions. In the arrangement of the invention, the closure member only needs to move through any built up ice over a few degrees of its arc and the level of ice build-up forward of the rotation direction is hence reduced by a factor of potentially up to around 50:1. Once the valve is in its open configuration, since no closed voids exist between the closure member and the lower wall of the valve chamber, then any ice in the recess would be washed away by the laminar fuel flow.

The recess may have a first inclined surface arranged toward the inlet and a second inclined surface arranged towards the outlet. The first inclined surface may be arranged at a first angle relative to the substantially straight or substantially convex inner side wall. The first angle is preferably greater than a second angle, at which the second inclined surface is arranged relative to the substantially straight or convex inner side wall.

A rotation axis, around which the closure member rotates between its closed and open positions may be offset from a centre, or a centre of curvature, of the valve chamber. The offset may be configured such that on rotating the closure member toward its closed position, a substantially radial gap between an outer surface of the closure member and an inner surface of the valve chamber is reduced. This can allow a gap to be provided between the closure member and the inner surface of the valve chamber when the valve is open, which can help with flushing of the valve and also avoid wear on seals provided on the closure member, but can also allow positive engagement of the closure member with the inlet or outlet opening to close the flow path. Where a seal is present, this can further enable the seal to be compressed against the inlet or outlet to prevent flow through the valve.

The closure member may comprise a seal and the reduction in the substantially radial gap may therefore compress the seal.

The closure member may be radially displaceable relative to a rotation axis, about which the closure member is arranged to rotate between its open and closed positions. This can enable the closure member to be advanced toward and away from the inlet or outlet which it is arranged to close, to open or close the flow path through the valve. This can further enable establishment of a positive seal between the valve body and the closure member. Retraction of the seal from the surfaces which it engages to seal the valve, can allow movement of the closure member between its open position its closed position without creating friction or wear between the seal and the walls of the valve or valve chamber.

A retraction mechanism may be provided and may be arranged to retract the closure member toward the rotation axis. This can facilitate retraction of the closure member to enable it to rotate away from the inlet or outlet with which may be arranged to engage to close the flow path through the valve.

The retraction mechanism may comprise a cam mechanism arranged to draw the closure member toward the rotation axis on rotation of a rotatable member of the cam mechanism. This allows retraction of the closure member from the inlet or outlet to be carried out via a rotational input.

The valve may further comprise a fixed guide and a follower member connected to the closure member. The follower member may be arranged to follow a profile of the fixed guide as the closure member is rotated between its closed and open positions. This allows the radial position of the closure member relative to its rotation axis to be controlled during rotation of the closure member between its open and closed positions.

The fixed guide may comprise a substantially arcuate portion. This can help to maintain the closure member at a substantially fixed radial position relative to its rotation axis during at least a part of its movement between its open and closed positions.

The profile of the fixed guide may comprise a notch, arranged to permit the closure member to move away from the rotation axis to close the flow path. The notch may be a radially extending portion of the fixed guide, extending radially relative to the rotation axis of the closure member. This can allow radial displacement of the follower member relative to the rotation axis.

A biasing element may be provided and may be arranged to bias the closure member away from the rotation axis. This can help to bias the closure member into a closed position, where it engages the inlet or outlet opening of the valve chamber.

The retraction mechanism may comprise a rotatable cam member, arranged to engage a follower member connected to the closure member, to retract the closure member on rotation of the rotatable cam member.

The follower member may be arranged to engage both of the rotatable cam member and the fixed guide. This enables a single follower member to be used to take a retraction input from the rotatable cam member and also to align the closure member relative to the fixed guide during rotation of the closure member between its open and closed positions.

The closure member may be rotatable about, and axially displaceable relative to, a rotation axis about which the closure member rotates between its open and closed positions.

Typically the valve is oriented with the inner side wall toward the bottom of the valve.

Typically the closure member is configured so that the one of the inlet and outlet openings which is closed by the closure member in its closed position is clear of obstruction by the closure member when the closure member is in its open position.

Typically the closure member is arranged to rotate into a side of the valve chamber outside the flow path when it is rotated to its open position.

Typically the fluid flow path between the inlet opening and the outlet opening of the valve chamber is substantially cylindrical or frustoconical.

Typically the fluid flow path between the inlet opening and the outlet opening of the valve chamber is not obstructed by the closure member when the closure member is in its open position. In one embodiment the fluid flow path between the inlet opening and the outlet opening of the valve chamber is obstructed by a drive shaft of the closure member when the closure member is in its open position, but in another embodiment it is not obstructed by the closure member, or any other part, when the closure member is in its open position.

The configuration of the rotatable closure member and/or the retraction mechanism may be advantageously implemented in combination with any form of valve chamber, although their use in combination with the substantially straight or convex lower side wall is preferred.

The valve may find utility in any road, rail, marine, space or airborne vehicle, in particular an aircraft, or in any fluid control system, particularly for use with water contaminated liquids where low temperatures may occur.

### BRIEF DESCRIPTION OF THE DRAWINGS

Embodiments of the invention will now be described with reference to the accompanying drawings, in which:
Figure 1 shows a conventional ball valve as known in the prior art;
Figure 2 shows a valve of the present invention in a closed configuration;
Figure 3 shows a valve of the present invention in an open configuration;
Figure 4 shows a valve of the invention having an off-set centre of rotation;
Figure 5 shows the valve of Figure 4 in a partially opened state;
Figure 6 shows the valve of Figure 4 and 5 in a fully open state;
Figure 7 is a schematic view of the valve of Figures 4-6 in a fully open state viewed from the input side of the valve;
Figure 8 is a schematic view of the valve of Figures 4-6 in a partially opened state viewed from the input side of the valve;
Figure 9 is a schematic view of the valve of Figures 4-6 in a closed state viewed from the input side of the valve;
Figure 10 is a schematic view of an alternative valve in a fully open state viewed from the input side of the valve;
Figure 11 shows a valve further comprising a retraction mechanism;
Figure 12 shows the valve of Figure 11 with the closure member in a retracted position;
Figure 13 shows the valve of Figures 11 and 12 partially rotated toward an open configuration;
Figure 14 shows the valve of Figures 11 to 13 in a fully open configuration.

### DETAILED DESCRIPTION OF EMBODIMENT(S)

Typical aircraft fuel valve requirements are as follows and can be relevant to the requirements of the valve of the present invention:
- To allow or terminate the flow of fuel on command from the Fuel Controller.
- To minimise fuel flow resistance when open.
- To be safe from rupture or collapse due to either high positive or negative internal pipe pressure.
- To typically have a horizontal axis to enable the valve to be located externally to the fuel tank adjacent the (typically spar mounted) valve actuating motors in the wing.
- To work over a large temperature range -55°C to +85°C

Figure 1 schematically illustrates a standard ball valve 1. The ball valve 1 has a valve body 101 and an inlet 102 and an outlet 103. In between the inlet 102 and the outlet 103, there is a valve chamber 104. The valve chamber 104 provides a fluid communication path between the inlet 102 and the outlet 103. It will be evident that the inlet 102 and the outlet 103 can be reversed depending upon the desired direction of fluid flow through the valve. The ball valve has a spherical or ball-shaped closure member 106, which can be rotated between the position illustrated in the Figure, in which the flow path through the valve is closed, and a second position, rotated 90° relative to the position indicated in Figure 1, where the inner walls 107 and 108 will be substantially parallel with the inner walls 109 and 110 of the valve body, to provide a flow path through the valve which is open to the flow of fluid. When the ball valve of Figure 1 is oriented as shown in the Figure, then gravity will act downwardly in a direction of arrow 111. Therefore, of the fluids present in the valve chamber, the fluid with the greatest density will tend to collect in the lower region or "sump" 112 of the valve. For example, if water is present in a fuel mixture left in the valve when the valve is closed, then water will tend to gather in the sump region 112. If the water then freezes, then it may hinder the opening of the valve by rotation of the ball element 106. Similarly, when the valve is in an open position, the outer spherical sides 107a and 108a of the ball element will occupy the regions 112 and 113 illustrated by dashed lines. A small gap is present between the inner wall 114 of the valve chamber 104 and the outer surface 108A or 107A of the ball element and so water can still collect in this gap. If this water then freezes, then the valve can potentially be hindered from being moved from an open state to a closed state.

The present invention proposes an alternative structure for a ball valve, which is based upon a structure for a general ball valve illustrated in Figure 1, but which seeks to overcome the drawbacks of the sump 112 present in the valve structure illustrated schematically in Figure 1. The valve of the present invention can therefore be considered sumpless, while having a ball-valve-like structure and method of operation and so can be termed a sumpless ball valve.

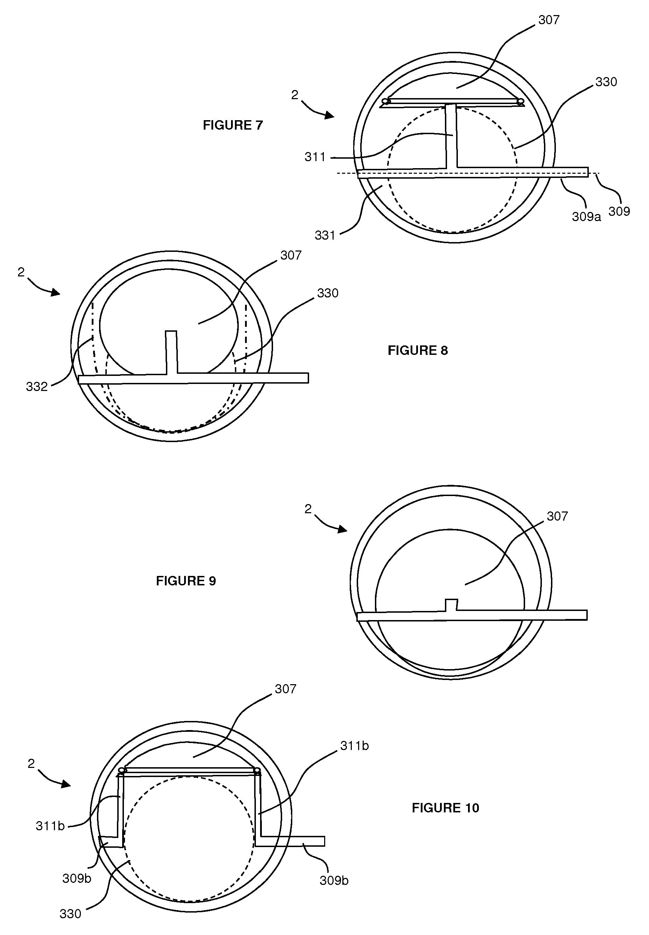

Figure 2 shows a valve 2 according to an embodiment of the present invention. The valve 2 comprises a valve body 201, which comprises an inlet 202 and an outlet 203. The valve further comprises a valve chamber 204, located between the inlet 202 and the outlet 203. The valve chamber 204 also comprises a circular inlet opening at the location indicated by dashed line 205 and a circular outlet opening at a location indicated by dashed line 206. A cylindrical volume through the valve chamber is bounded at one end by the circular inlet opening 205 and at the other end by the circular outlet opening 206. The cylindrical volume is not labelled in Figure 2, but it is indicated by a dashed line 330 in Figures 7-10. The cylindrical volume 330 provides a substantially straight fluid flow path through the valve chamber between the inlet opening 205 and the outlet opening 206. If the inlet and outlet openings have different diameters then the substantially straight fluid flow path through the valve chamber will be defined by a frustoconical volume between the inlet and outlet openings.

A closure member 207 is provided for closing the outlet opening 206. It will be appreciated that the inlet opening 205 and the outlet opening 206 can be reversed by connecting the valve such that the fluid flow flows in an opposite direction to that indicated by arrow 208. The inlet and outlet of the valve are therefore substantially interchangeable although in view of the configuration of the valve, it can be preferable to have the normal direction of fluid flow through the valve in the inlet to outlet direction indicated by arrow 208 in the figure. This is because pressure from the inlet side when the valve is closed will tend to bias the closure member 207 toward the outlet opening 206 which it closes, which increases the sealing force of the closure member 207 at the outlet opening 206. It can therefore be preferable to have the closure member arranged to close the outlet opening 206. Conversely, if the closure member is arranged to close the inlet opening, the force required to open the valve may be reduced, which may be beneficial in certain circumstances. The closure member 207 is arranged so as to be rotatable about a rotation axis 209. The rotation axis may preferably be located at or near to a substantial centre of the valve chamber. By rotation of the closure member 207 in a direction of arrow 210, the closure member 207 can be rotated upwardly in the Figure and substantially out of the flow path from inlet to outlet through the valve, indicated by arrow 208. A connecting member 211 can be provided to connect the closure member 207 to its point of rotation 209. An O-ring seal 212 may be located on the outer part-spherical surface 213 of the closure member, to improve its sealing engagement with the inner walls of the valve chamber 204, or with the outlet opening 206.

As can be seen in the Figure, the valve chamber 204 includes a substantially straight inner side wall 214, which provides a substantially straight path through the valve 2. The wall 214 is substantially straight in the direction of flow through the valve, so it appears straight when viewed in cross-section from the side as in Figure 2, transverse to the direction of flow. The wall 214 may be planar so that it also appears straight when viewed in the direction of flow. However, more typically, when viewed in cross-section in the direction of flow as in Figure 7, the wall 214 appears concave.

When the valve is appropriately oriented with the substantially straight inner side wall toward the bottom of the valve with gravity acting in a direction of arrow 20, then the build-up of fluid in the bottom part of the valve can be avoided. The valve is therefore sumpless, since the volume of the valve chamber below a lowest straight line drawn between the inlet to the outlet (in other words, below the cylindrical volume 330) is minimised or reduced to zero. Such minimisation or reduction to zero of this sump volume may also be achieved by a substantially convex inner side wall 214 being oriented toward the bottom of the valve. That is, rather than providing a substantially straight path through the valve as shown in Figure 2, the wall 214 may be shaped as indicated in dashed lines at 214a to provide a substantially convex path through the valve.

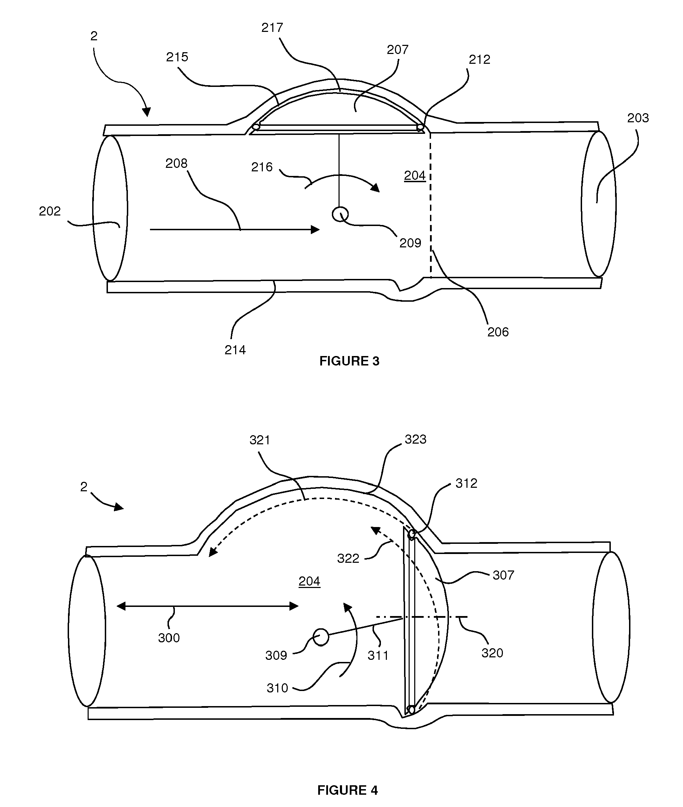

Figure 3 illustrates the valve 2 of Figure 2, with the closure member 207 rotated from its closed position of Figure 2 into an open position. As can be seen in the Figure, this leaves the outlet opening 206 clear of obstruction by the closure member 207 and the closure member 207 has been moved into a portion of the valve chamber 204 located away from the substantially straight fluid flow path through the valve indicated by arrow 208, which can be considered the flow path defined by a substantially straight path between the inlet and the outlet openings 205 and 206 (that is, the cylindrical volume 330). As will be appreciated from the figures, to return the valve to a closed configuration, the closure member 207 can be rotated about rotation axis 209 to return the valve to the configuration illustrated in Figure 2. In the open configuration of figure 2, the closure member 207 is located adjacent a side wall 215 of the valve chamber 204, which is substantially opposite the substantially straight side wall 214 of the valve chamber 204. The rotation axis 209 can be offset relative to a centre of the valve chamber 204. The rotation axis 209 can be offset so that it is located at a distance from sidewall 215 which is greater than a distance between the axis 209 and the outlet opening 206, which is closed by the closure member 207. In this manner, when the closure member 207 is rotated in a direction of arrow 216, the gap 217 between the sidewall 215 of the valve chamber and the closure member 207 is reduced as the closure member 207 approaches the outlet opening 206, so that when the closure member 207 is located over outlet opening 206, it a more effective seal is provided between the closure member 207 and the outlet opening 206. Where the preferred O-ring seal 212 is present, this arrangement can allow the O-ring seal to be compressed to close the outlet opening 206, while releasing the O-ring seal 212 from compression when the closure member 207 is in the open position. This can help to reduce wear on the O-ring seal 212 as it may not be compressed against or in contact with side wall 215 when moving between its open and closed positions.

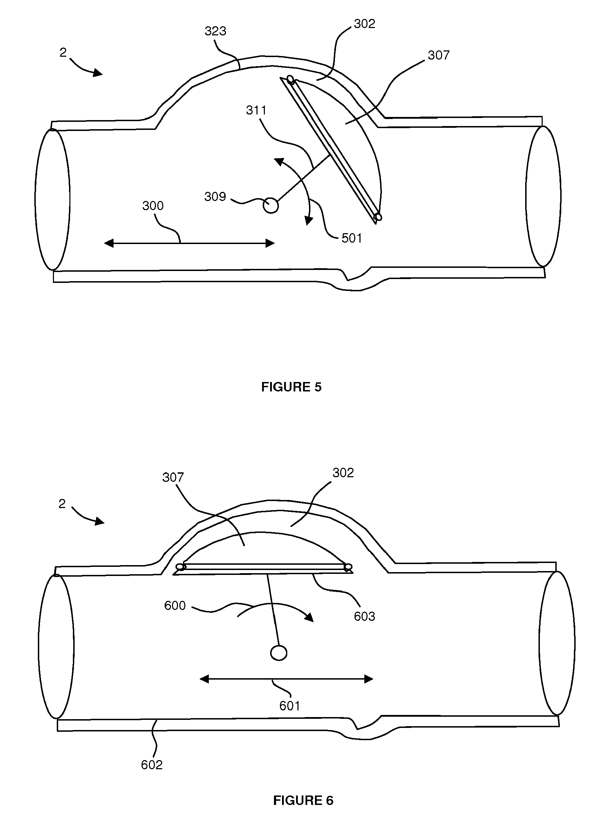

Figure 4 shows a further embodiment of a valve 2 of the present invention. In this embodiment, the rotation axis 309 of the closure member 307 of the valve is offset from a central axis 320 of the closure member 307. The connecting member 311 is therefore oriented along a line which is at a non-zero angle from the central axis 320 of the closure member 307. This offset can help to cause a sealing force to be generated on the seal 312 when the valve is in a closed position. This increased sealing force can help to react pressure related forces resulting from pressure differences in either direction through the valve and so the valve can be better suited to use in bi-directional flow situations in either direction as indicated by arrow 300. The dashed lines 321 and 322 illustrate the rotational paths followed by each edge of the O-ring seal 312 as the closure member 307 is rotated about the point of rotation 309 in the direction of arrow 310 toward an open position. As will be appreciated from the illustration, the offset of the rotation axis 309 relative to the centre line 320 of the closure member 207, combined with a change in the radius of curvature of the curved valve chamber wall 323, causes a gap to be formed between the closure member 307 and the wall 323. This helps to prevent the build-up of any fluid, including water which may freeze, in between the closure member 307 and the wall 323. This is illustrated with greater clarity in relation to Figures 5 and 6.

Figure 5 shows the valve 2 of Figure 4 in a partially opened state. As indicated by arrow 501, the closure member 307 can rotate in either clockwise or anticlockwise direction around the axis of rotation 309. The upper and lower edges of the closure member follow the paths as illustrated by arrows 321 and 322 of Figure 4. It can therefore be seen that a gap is created between the wall 323 of the valve chamber and the closure member 307. This gap further enables the flow through the valve, in either direction as indicated by arrow 300, to flush fluid through the gap 302, to prevent the build up of stagnant fluid, obstructions or frozen water in gap 302.

Figure 6 shows the valve 2 of Figures 4 and 5 in a fully opened position. In this opened position, it can be seen that a substantially straight path in the direction of arrow 601 is provided through the valve, since the lower wall 602 provides a straight path on the lower side of the valve, while the back face 603 of the closure member 307, which as in all embodiments is planar and hence substantially straight in the flow direction, provides a substantially straight path toward the upper side of the valve. The gap 302 remains in the upper part of the valve chamber in order to allow fluid to be flushed through that part, to prevent any build-up of water or other solidifying fluids therein.

Figures 7-9 are schematic diagrams showing the shape of the valve when viewed in cross-section transverse to the flow direction. Figure 7 shows the closure member 307 in its raised (open) position corresponding with Figure 6, Figure 8 shows the closure member 307 rotated down to an intermediate position corresponding with Figure 5, and Figure 9 shows the closure member 307 in its lowered (closed) position corresponding with Figure 4.

The closure member 307 is mounted on a shaft 309a running along the axis of rotation 309 which is driven by a motor (now shown) on the right-hand side of the valve (in the viewing direction of Figure 7) and rotates in a bearing on the other (left-hand) side of the valve. The cylindrical volume between the circular inlet opening 205 and the circular outlet opening 206 is indicated by a dashed line 330. The upper part of the chamber above the flow volume 330 is spherical in order to accommodate the spherical surface 213 of the closure member.

The lower part of the chamber may be circular in cross-section as shown in Figures 7-9. As a result the lower part of the chamber includes a volume 331 which lies outside the flow path provided by the cylindrical volume 330. In an alternative embodiment, the lower part of the chamber may be shaped as indicated by dot-dashed line 332 to reduce this volume outside the flow path.

When the closure member 307 is moved to its open position as in Figure 7, it is moved away from the flow path defined by the cylindrical volume 330 between the inlet opening and the outlet opening. In other words, when the closure member 307 is in its open position then there is no straight line which passes through the inlet and outlet openings 205, 206 and also passes through the closure member 307. This can be contrasted with a conventional butterfly valve in which the flow path remains partly obstructed by the closure member when the valve is open.

As shown in Figure 7 the shaft 309a and connecting member 311 pass through the flow path. The alternative embodiment of Figure 10 mounts the closure member 307 on a pair of shafts 309b and associated connecting members 311b which do not pass through the flow volume 330. Thus in the embodiment of Figure 10 the flow path defined by the cylindrical volume 330 is entirely unobstructed when the valve is open, like the conventional ball valve of Figure 1. In other word, the fluid flow path between the inlet opening and the outlet opening of the valve chamber is not obstructed by the closure member 307, or any other part, when the closure member 307 is in its open position as shown in Figure 10.

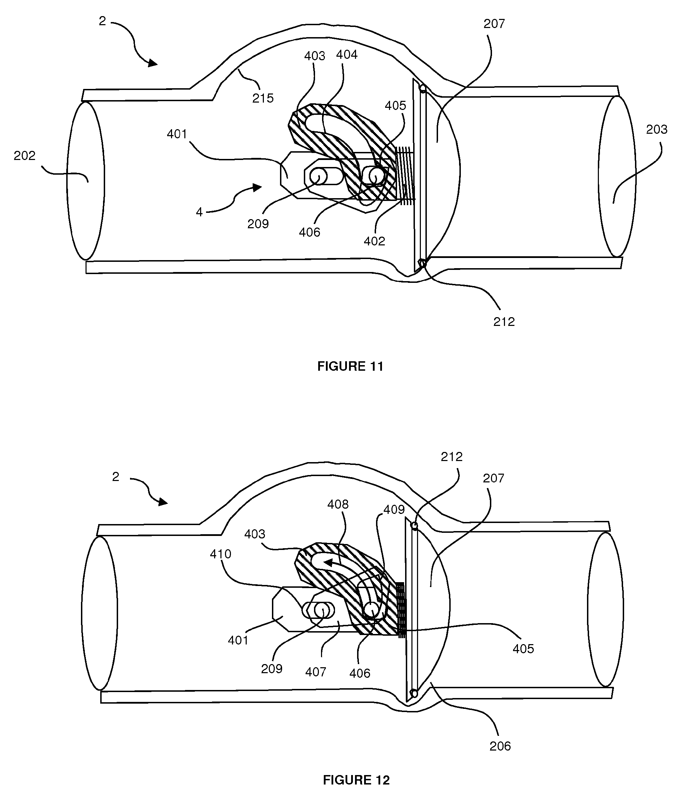

Figure 11 shows a second embodiment of the present invention. The valve 2 in this embodiment is constructed in a similar manner to the valve 2 shown in Figures 2 to 9. However, the closure member 207 is provided with a retraction mechanism 4. The retraction mechanism 4 permits retraction of the closure member toward the rotation axis 209, as well as extension of the closure member 207 away from the rotation axis 209. The mechanism therefore allows radial displacement of the closure member 207 relative to its rotation axis 209, while permitting rotation of the closure member 207 about the rotation axis 209. The mechanism 4 comprises a rotation member 401. The rotation member 401 is mounted on the rotation axis 209, which may be provided in the form of a substantially cylindrical bar on which the rotation member 401 is mounted via an opening through the rotation member 401. In another alternative arrangement, to provide this radial and rotational movement, the rotation member 401 may comprise a first part which is rotatable relative to the rotation axis 209, and which is connected to a second part, which is longitudinally, or radially, extendable relative to the first part. Either of these arrangements can allow the closure member 207 to both rotate relative to, and be radially displaced relative to, the rotation axis 209. The retraction mechanism 4 also comprises a biasing member 402 in the form of a spring in the illustrated example. However, other forms of known biasing means may be suitable for biasing the closure member 207 away from the rotational axis 209 and toward the outlet opening 206 in order the close the outlet opening 206. The mechanism further comprises a fixed guide 403. The fixed guide 403 comprises a substantially arcuate portion 404, and also a notch 405, which can be a portion of the guide which extends radially way from rotation axis 209. As can be seen in the Figure, when in the closed position, a follower member 406, which is attached to the closure member 207 either directly, or indirectly via the rotation member 401 is located in the notch 405. The follower member 406, when in the closed position of the closure member 207, engages the radially extending notch 405. As will be appreciated, this engagement prevents rotation of the rotation member 401, and the closure member 207 about the axis of rotation 209 to lock the closure member in its closed position.

Figure 12 illustrates the valve 2 of the present invention with the closure member 207 in a retracted position. In order to retract the closure member 207 away from the outlet opening 206, a rotatable cam member 407 is rotated relative to the rotation member 401 and the follower member 406. The rotatable cam member 407 is illustrated in transparent form in schematic Figure 12, in order that the other components of the assembly can be properly seen. The rotatable cam member 407 may be located in front of, or behind the fixed guide 403 and the rotation member 401. The effect of the rotation of the rotatable cam member 407 in a direction of arrow 408 is that the follower member 406 follows a cam surface 409 of the rotatable cam member 407 and this causes the follower member to be retracted towards the rotation axis 209. As can be seen in in the Figure, this moves the rotation member 401 on the rotation axis 209, via movement of the rotation axis 209 in a slot 410 formed in the rotation member, so that all of the rotation member 401, the follower member 406 and the closure member 207 are retracted away from the opening 206. In this way, rotation of the rotatable cam member 407 can cause the closure member 207 to be retracted from the opening 206, this releases any compressive force from the seal 212 and can provide a gap between seal 212 and side walls of the valve chamber to avoid wear of the seals when the closure member rotates between it open and closed positions about rotation axis 209.

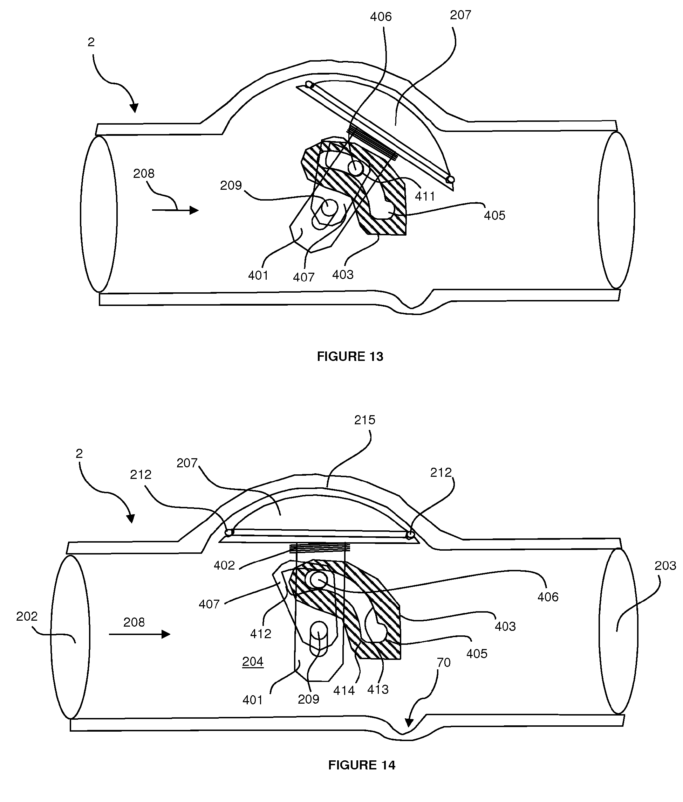

Figure 13 shows the valve of Figure 12 in a partially opened state. As can be seen in the Figure, the follower member 406 has begun to follow a substantially arcuate portion of the fixed guide 403. The rotatable cam member 407 has a stroke of finite rotational extent, with a stop provided at either end. The first stop 411 therefore drives the follower member 406 around the rotation axis 209, thus rotating the rotation member 401 and the closure member 207 about the rotation axis 209, to rotate the closure member 207 out of the substantially straight flow path though the valve indicated by arrow 208.

Figure 14 shows the valve 2 of Figures 11 to 13 in a fully open position. As can be seen in Figure 14, the follower member 406 has further followed the fixed guide 403, driven by rotation of the rotatable cam member 407, anticlockwise about the rotation axis 209. The rotation member 401 has rotated such that the closure member 207 is substantially entirely removed from the substantially straight flow path through the valve chamber 204. Due to the retraction of the closure member toward the rotation axis 209, the closure member 207 can be maintained at a distance from inner wall 215 of the valve chamber, which can further ensure that the seal 212 is maintained at a distance from the inner wall 215, which reduces the risk of wear on the seal 212 by friction or contact with the inner wall 215.

Moving the valve back to the closed position is essentially a reversal of the process of opening the valve. From the position illustrated in Figure 14, the rotatable cam member 407 will be rotated in a clockwise direction. This will cause the second stop 412, at an opposite extent of the cam opening, comprising a cam surface of rotational cam member 407, to engage the follower member 406. However, the follower member 406 will be maintained at its illustrated radial position relative to rotation axis 209 by contact with the outer arcuate portion 413 of the fixed guide 403. Further rotation of the rotatable cam member 407 in a clockwise direction will drive the rotation member 401 and closure member 207 through their positions as illustrated in Figure 13, and ultimately back to the rotational orientation shown in Figure 12. In this orientation, the closure member 207 is aligned with the outlet opening 206. Since the rotatable cam member 407 will already be oriented with its second stop 412 in contact with follower member 406, the radial distance provided in the cam opening of the rotatable cam member adjacent second stop 412 will permit some radial displacement of the follower member 406 away from the rotation axis 209. This will permit the follower member to enter the notch 405. Movement of the follower member into notch 405 may be driven by biasing a force of the biasing member 402, or via a pressure differential between inlet and outlet sides of the closure member 207 caused by fluid flow. Therefore, once the closure member 207 reaches the appropriate rotational position around the rotation axis 209 and is aligned over outlet opening 206, a biasing force will drive the closure member 207 into its closed position illustrated in Figure 11.

It can be preferable to a have a small recess 70 in the lower part of the valve in order to allow the closure member 207 and the preferable seal 212 to properly close the outlet opening. Any such recess can represent a potential "sump", where fluids may gather and potentially solidify if left in that location. However, appropriate dimensioning of the recess 70 can ensure that any fluids at risk of solidification are flushed from the recess 70 during operation of the valve, such as when it is in its open state.

As can be seen in Figure 12, when the closure member 207 is just retracted but aligned with the outlet opening 206, or when, during closure of the valve, the closure member 207 approaches the orientation where the closure member will engage the outlet opening 206, there is a relatively small gap between the closure member 207 and the outlet opening 206. This will cause a relatively high velocity flow through these gaps, which will help to flush fluids, such as water, which may have gathered there from fuel passing through the valve, before the valve reaches its fully closed configuration. A relatively small recess provided adjacent the opening which is closed by the closure member is therefore essentially self flushing on closure of the valve and so can help to prevent the build-up of unwanted fluids in the recess to avoid the problems of the prior art.

It is also possible to provide a profile in fixed guide 403 which has a profile toward its closed end, the closed end designating the end at which the follower member 406 is located when the valve is in its closed configuration, the profile being configured to guide the follower member to extend the closure member 307 away from the rotation axis 209 in order to force the closure member to a sealed position against the inlet or outlet opening which it closes, and to lock it in place by nature of the rotational force holding the valve in its closed position.

All embodiments on the invention can be used in conjunction with a rotational input, such as from an electric or hydraulic drive motor, or any form of rotational input means. The input means is preferably reversible to provide reversible rotation between the open and closed configurations of the valve.

It will be apparent from the above description that the invention can optionally provide a valve comprising a ball valve rotor, in which the ball has been deleted and replaced by a partial-arc-shaped, or at least partially spherical seal.

The valve chamber can be formed with a partially spherical shroud, provided with a flattened wall at the bottom, such that the partial-arc-shaped or part-spherical valve rotor or closure member can rotate by around 90 degrees from an open position to a closed position. A spherical valve can be provided without a lower sump recess. A small recess in the lower shroud or valve chamber may be provided to accommodate the end of travel of the closure element to its closed position, and to accommodate the o-ring seals. The optional retraction mechanism withdrawal mechanism can improve seal life.

A sumpless ball valve of the invention can therefore preventing water (from the fuel) collecting and freezing, and consequentially jamming the mechanism.

A single o-ring or equivalent seal can be provided, while ensuring all parts of the mechanism are flushed by fuel when in the open configuration. The small lower recess void can be shaped to ensure turbulence flushes any moisture through when open.

The valve may comprise no sealed voids, when open, where water or other relatively dense materials can collect, freeze and jam the mechanism.

For 2-way flows where water is not an issue, closure members of the present invention may be duplicated, facing in opposite flow directions, with optional duplicated retraction mechanisms as described above, but facing in opposite direction to one another. This would enable high pressure bi-directional flows to be effectively sealed, which flows could otherwise have the potential to overcome the spring loading force encouraging the closure member to its closed position due to pressure on the closure member.

Although the invention has been described above with reference to one or more preferred embodiments, it will be appreciated that various changes or modifications may be made without departing from the scope of the invention as defined in the appended claims.

## Claims

1. A fluid control valve comprising:
a valve body, having a valve chamber disposed between an inlet and an outlet of the valve, the valve chamber providing a fluid flow path between an inlet opening and an outlet opening of the valve chamber;
a closure member configured to be rotated between a closed position, in which the flow path through the valve chamber is closed by the closure member closing one of the inlet and outlet openings, and an open position, in which the closure member is moved away from the flow path and the flow path through the valve chamber is open;
wherein the valve chamber comprises an inner side wall which provides a substantially straight or substantially convex path through the valve chamber, so as to prevent fluid from gathering in the valve chamber when the valve is oriented with the side wall toward the bottom of the valve.

2. A fluid control valve according to claim 1, wherein the valve chamber and/or the closure member is at least part spherical.

3. A fluid control valve according to any of the preceding claims, wherein the closure member is arranged to rotate toward a side of the valve chamber substantially opposite the substantially straight or substantially convex inner side wall.

4. A fluid control valve according to any of the preceding claims, wherein the closure member comprises a seal located in a substantially circumferential groove located on a part-spherical surface of the closure member.

5. A fluid control valve according to any of the preceding claims, wherein the substantially straight or substantially convex inner side wall comprises a recess for receiving a portion of the closure member.

6. A fluid control valve according to any of the preceding claims, wherein a rotation axis, around which the closure member rotates between its closed and open positions, is off-set from a centre of curvature of the valve chamber, such that on rotating the valve toward the closed position, a substantially radial gap between an outer surface of the closure member and an inner surface of the valve chamber is reduced.

7. A fluid control valve according to any of the preceding claims, wherein the closure member is radially displaceable relative to a rotation axis, about which the closure member rotates between its open and closed positions.

8. A fluid control valve according to claim 7, further comprising a retraction mechanism, arranged to retract the closure member toward the rotation axis.

9. A fluid control valve according to claim 7, further comprising a fixed guide and a follower member connected to the closure member, the follower member being arranged to follow a profile of the fixed guide as the closure member is rotated between its closed and open positions.

10. A fluid control valve according to claim 7, further comprising a biasing element arranged to bias the closure member away from the rotation axis.

11. A fluid control valve according to any of the preceding claims, wherein the closure member is rotatable about, and axially displaceable relative to, a rotation axis, about which the closure member rotates between its open and closed positions.

12. A fluid control valve according to any of the preceding claims, wherein the valve is oriented with the inner side wall toward the bottom of the valve.

13. A fluid control valve according to any of the preceding claims, wherein the closure member is configured so that the one of the inlet and outlet openings which is closed by the closure member in its closed position is clear of obstruction by the closure member when the closure member is in its open position.

14. A fluid control valve according to any of the preceding claims, wherein the closure member is arranged to rotate into a side of the valve chamber outside the flow path when it is rotated to its open position.

15. A fluid control valve according to any of the preceding claims, wherein the fluid flow path between the inlet opening and the outlet opening of the valve chamber is not obstructed by the closure member, or any other part, when the closure member is in its open position.
